# EUROPEAN PATENT APPLICATION

(11) **EP 4 775 907 A1**
(43) Date of publication of application: **15.07.2026**
(21) Application number: 25220421.9
(22) Date of filing: 03.12.2025
(51) Int. Cl.: F26B 13/00, B05D 3/00, F26B 13/10, F26B 21/55, H01M 4/00, B65H 23/00, F26B 13/20

(54) **SYSTEM AND METHOD FOR MANUFACTURING ELECTRODE FOR A SECONDARY BATTERY, AND USE THEREOF**

(30) Priority: 14.01.2025 KR 20250005402
(71) Applicant: SK Innovation Co., Ltd., Seoul 03188 (KR); SK On Co., Ltd., Seoul 03161 (KR)
(72) Inventor: SEO, Jang Won, 34124 Daejeon (KR); LEE, Jun Young, 34124 Daejeon (KR); KIM, Juhyun, 34124 Daejeon (KR); PARK, Ji Yeon, 34124 Daejeon (KR); JANG, Tae Young, 34124 Daejeon (KR)
(74) Representative: Prüfer & Partner mbB Patentanwälte · Rechtsanwälte

(57) **Abstract**

A system, a use of said system, and a method for manufacturing and drying of one or more electrodes for a secondary battery are disclosed. The system (1) includes a coating portion (30) adapted to apply a coating material (6) to a coating substrate (5) travelling along a path; and a drying portion (40) adapted to dry the coating material (6), wherein the drying portion (40) includes at least one Coanda nozzle (71) that is adapted to spray hot air onto one surface of the coating substrate (5), and wherein the Coanda nozzle (71) includes at least one hot-air blocker (90) that is adapted to selectively block a spray port through which hot air is sprayable.

## Description

### TECHNICAL FIELD

The present disclosure relates to a system for manufacturing an electrode of a secondary battery. The present disclosure further relates to a use of said system for a uniform drying of one or more electrodes, and to a method for drying one or more electrodes for a secondary battery.

### BACKGROUND

Unlike a primary battery, a secondary battery may be applied to devices within various fields, such as a digital camera, a mobile phone, a laptop, a hybrid vehicle, and an electric vehicle, as a secondary battery may be charged and discharged. Recently, research into lithium secondary batteries having high energy density and discharge voltage has been actively conducted.

Generally, an electrode plate of a lithium secondary battery may be manufactured through a process of coating a positive or negative active material on aluminum or copper sheets and a process of drying the active material.

The coating and drying processes may significantly impact the quality of a secondary battery. However, in general batteries, an active material in an electrode having gone through the drying process may become partially or excessively dried for various reasons, which may be exacerbated when a travelling speed of an electrode increases.

Thus, a device which may uniformly dry an electrode may be necessary.

### SUMMARY

An aspect of the present disclosure is to provide a system for manufacturing an electrode of a secondary battery, which may maintain drying uniformity.

A battery cell and a method of manufacturing a seal gasket may be widely applied to green technology fields such as an electric vehicle, a battery charging station, and a solar power generation and wind power generation using batteries. Also, the battery cell of the present disclosure may be used in an eco-friendly electric vehicle, a hybrid vehicle, or the like, to ameliorate the effects of climate change by suppressing air pollution and greenhouse gas emissions.

According to a general aspect of the present disclosure, a system for manufacturing an electrode includes a coating portion adapted to apply a coating material to a coating substrate travelling along a path; and a drying portion adapted to dry the coating material, wherein the drying portion includes at least one Coanda nozzle that is adapted to spray hot air onto a first surface of the coating substrate, and wherein the Coanda nozzle includes at least one hot-air blocker that is adapted to selectively block a spray port through which hot air is sprayable.

The spray port may be formed in a slit shape in a width direction of the coating substrate, and a plurality of the hot-air blockers may be provided. Preferably, the plurality of hot-air blockers is coupled to a single spray port.

The hot-air blocker may include a blocking door coupled to the spray port and adapted to open and close the spray port; a hinge portion configured to allow the blocking door to be hinge-coupled to the spray port; and a driving portion adapted to rotate the blocking door.

The hinge portion may include a rotating shaft; a first plate coupled to the blocking door and coupled to the rotating shaft so as to be rotatable; a second plate coupled to a housing of the Coanda nozzle and coupled to the rotating shaft; and an elastic member configured to elastically press the first and second plates such that the first plate and the second plate maintain a constant angle.

The elastic member may include a torsion spring coupled to the rotating shaft, and/or the driving portion may include a wire arranged to have one end coupled to the first plate; and a driving device arranged to be coupled to the Coanda nozzle, connected to the other end of the wire and adapted to pull the wire.

The system may further include a wire guide arranged to be formed in a tube shape and fastened to the second plate or the housing, and the wire may be disposed to penetrate the wire guide. Preferably, the driving device is arranged to be fastened to an external surface of a sidewall of the housing.

The hinge portion may have a guide groove formed in a portion in contact with the wire, and the wire may be insertable into the guide groove such that movement in a diameter direction of the wire can be prevented.

The hot-air blocker may include a blocking door sliding and coupled to the spray port and opening and closing the spray port and a slide driving portion disposed on a side surface of the Coanda nozzle and comprising a winding shaft that is adapted to wind the blocking door. The slide driving portion may further include a power device that is adapted to rotate the blocking door.

The slide driving portion may include a first driving portion and a second driving portion, disposed on both side surfaces of the Coanda nozzle, respectively, and the blocking door may include a first blocking door wound on the first driving portion and a second blocking door wound on the second driving portion. Preferably, in the spray port, at least a portion of the first blocking door and at least a portion of the second blocking door may be disposed to overlap each other.

Each of the first blocking door and the second blocking door may include at least one opening portion adapted to allow hot air to pass through and at least one blocking portion adapted to block at least a portion of hot air.
The system may further include a control portion that is configured to selectively open and close the blocking door by controlling the driving portion. In particular, the control portion is adapted to control a flow of hot air based on a drying state of the coating material passing through the drying portion. Preferably, travelling the system further includes a measuring portion configured to measure a drying state of the coating material passing through the drying portion, wherein the blocking door is selectively openable and closable by the control portion based on the drying state of the coating material.

The drying portion may further comprise first and second hot-air supply devices adapted to supply hot air to the first surface and to a second surface of the coating substrate, respectively. Preferably, the second hot-air supply device includes a plurality of hot air nozzles spaced apart from each other at a predetermined distance in a travelling direction of the coating substrate, and at least one infrared lamp disposed between the plurality of hot air nozzles.

According to another general aspect of the present disclosure, the system travelling may be used for uniform drying of one or more electrodes for a secondary battery.

According to another general aspect of the present disclosure, a method for drying one or more electrodes for a secondary battery may be provided which comprises: applying, by a coating portion, a coating material to a coating substrate, the coating substrate travelling along a path; and drying, by a drying portion, the coating material. The drying portion includes at least one Coanda nozzle that is adapted to spray hot air onto a first surface of the coating substrate, and the Coanda nozzle includes at least one hot-air blocker that is adapted to selectively block a spray port through which hot air is sprayed.

In an embodiment, a plurality of the hot-air blockers may be provided and arranged to be coupled to a single spray port and respectively comprise a blocking door, a hinge portion, and a driving portion, wherein the spray port may be opened and closed by the blocking door. The blocking door may be allowed to be hinge-coupled to the spray port by the hinge portion, and each of the blocking doors may be rotated by the driving portion. Optionally, each of the blocking doors may be selectively opened and closed by a control portion through controlling the driving portion.

### BRIEF DESCRIPTION OF DRAWINGS

Predetermined aspects, features, and advantages of the present disclosure are illustrated by the following detailed description with reference to the accompanying drawings.
FIG. 1 is a diagram illustrating a system for manufacturing an electrode according to an embodiment of the present disclosure;
FIG. 2 is a diagram illustrating a drying portion illustrated in FIG. 1;
FIG. 3 is an enlarged cross-sectional diagram illustrating portion A illustrated in FIG. 2;
FIG. 4 is an enlarged diagram illustrating a portion of FIG. 3;
FIGS. 5 and 6 are perspective diagrams illustrating a Coanda nozzle illustrated in FIG. 3;
FIG. 7 is an enlarged perspective diagram illustrating portion B in FIG. 5;
FIG. 8 is an enlarged perspective diagram illustrating portion C in FIG. 6;
FIG. 9 is a diagram illustrating a modified example of a Coanda nozzle illustrated in FIG. 5;
FIG. 10 is a diagram illustrating a hot-air blocker according to another embodiment of the present disclosure;
FIG. 11 is a diagram illustrating a hot-air blocker according to another embodiment of the present disclosure;
FIG. 12 is a cross-sectional diagram taken along line I-I' in FIG. 11;
FIG. 13 is a diagram illustrating a hot-air blocker according to another embodiment of the present disclosure;
FIG. 14 is a diagram illustrating a hot-air blocker according to another embodiment of the present disclosure;
FIG. 15 is a diagram illustrating a drying portion according to another embodiment of the present disclosure; and
FIG. 16 is a diagram illustrating a system for manufacturing an electrode according to another embodiment of the present disclosure.

### DETAILED DESCRIPTION

The embodiments of the present disclosure are illustrated in embodiments with reference to the accompanying drawings.

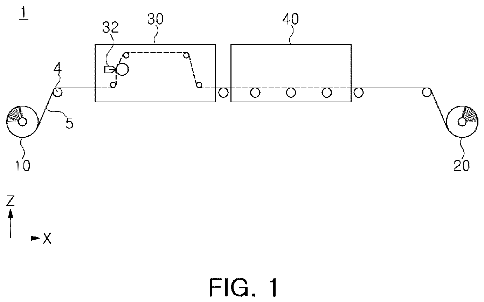

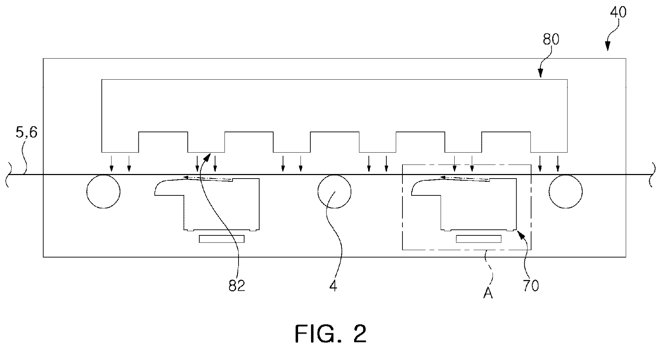

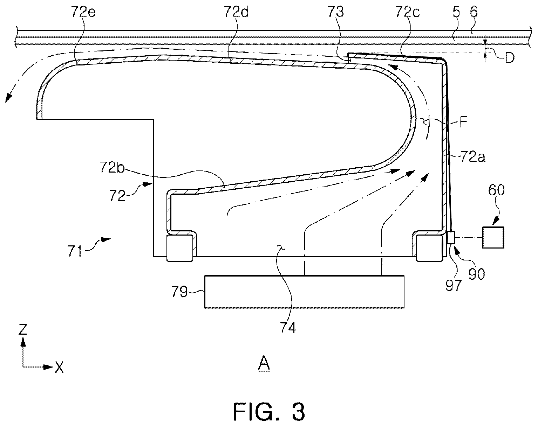

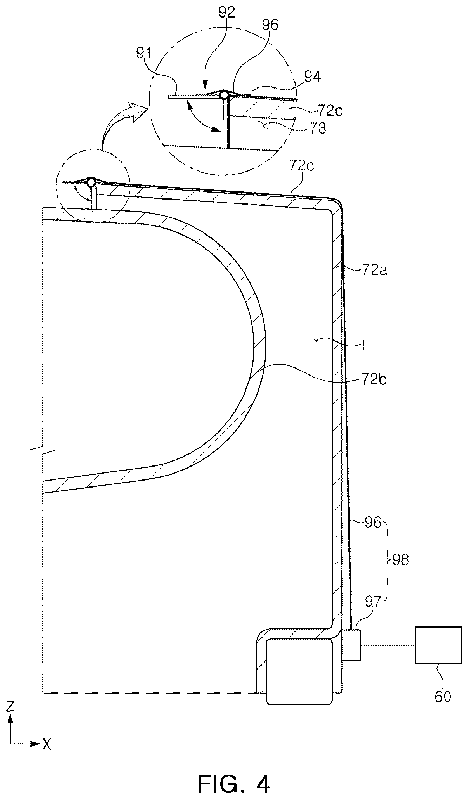

FIG. 1 is a diagram illustrating a system for manufacturing an electrode according to an embodiment. FIG. 2 is a diagram illustrating a drying portion illustrated in FIG. 1. FIG. 3 is an enlarged cross-sectional diagram illustrating portion A illustrated in FIG. 2. FIG. 4 is an enlarged diagram illustrating a portion of FIG. 3. FIG. 4 illustrates an open state of a blocking door 91 illustrated in FIG. 3.

Referring to FIGS. 1, 2, 3, and 4, a system for manufacturing an electrode of a secondary battery according to the embodiment may include an unwinder 10 unwinding and supplying a coating substrate 5, a coating portion 30 coating a coating material 6 on a coating region of the coating substrate 5, a drying portion 40 drying the coating material 6, and a rewinder 20 rewinding the coating substrate 5.

In an embodiment, the system 1 for manufacturing an electrode of a secondary battery may include a coating portion 30 applying a coating material 6 to a coating substrate 5 travelling along a path, and a drying portion 40 drying the coating material 6. Also, the drying portion 40 may include at least one Coanda nozzle 71 spraying hot air onto one surface (first surface) of the coating substrate 5, and the Coanda nozzle 71 may include a hot-air blocker 90 selectively blocking a spray port 73 through which the hot air is sprayed.

Also, in an embodiment, the system 1 for manufacturing an electrode of a secondary battery may include a coating portion 30 applying a coating material 6 onto a coating substrate 5 travelling along a path, a drying portion 40 spraying hot air onto the coating material 6 to dry the coating material 6, and a control portion 60 controlling the flow of hot air based on a drying state of the coating material 6 having passed through the drying portion 40. Here, the drying portion 40 may include at least one hot-air blower spraying hot air onto one surface of the coating substrate 5, and a plurality of blocking doors 91 may be disposed to be open and closed in a spray port 73 through which the hot air is sprayed. The control portion 60 may control opening and closing of the plurality of blocking doors 91.

In the embodiment, the coating substrate 5 may be provided in the form of a thin strip having a predetermined width and may refer to a metal thin film for manufacturing an electrode of a secondary battery. For example, as for the coating substrate 5, an aluminum thin film may be used in manufacture of a positive electrode, and a copper thin film may be used in manufacture of a negative electrode.

The coating substrate 5 may be supplied from the unwinder 10, may travel along a predetermined path, and may be rewound in the rewinder 20. During this process, the coating substrate 5 may pass through the coating portion 30 and the drying portion 40 in order. To this end, the system 1 for manufacturing an electrode in the embodiment may include a transport device transporting the coating substrate 5 in the above-described order. For example, the transport device may include a plurality of rollers 4 rotating and supporting the coating substrate 5.

The unwinder 10 may unwind the coating substrate 5, which is wound in a roll form, and may supply the coating substrate 5 to the coating portion 30. As described above, the coating substrate 5 supplied from the unwinder 10 may be a metal thin film, such as an aluminum thin film or a copper thin film.

The coating portion 30 may coat the coating material 6 on the coating substrate 5 supplied from the unwinder 10 and travelling. To this end, the coating portion 30 may include a slot die coater 32, but an embodiment thereof is not limited thereto.

As for the coating material 6, an active material in a slurry state may be used, and the coating process may be performed in the same manner for both positive and negative electrodes. In the embodiment, the coating material 6 may be applied to only one surface of the coating substrate 5 as an example, but the coating material 6 may also be applied to both surfaces of the coating substrate 5 if desired.

The drying portion 40 may include at least one chamber through which the coating substrate 5 passes, and may apply heat to the coating material 6 passing through the chamber and may remove moisture from the coating material 6. To this end, the drying portion 40 in the embodiment may include a first heat source and a second heat source.

The first heat source and the second heat source may be positioned in opposite directions with the coating substrate 5 interposed therebetween. For example, the first heat source may include a first hot-air supply device 70 supplying hot air at a determined temperature to one surface of the coating substrate 5. The second heat source may include a second hot-air supply device 80 supplying hot air at a determined temperature to the other surface (second surface) of the coating substrate 5. Accordingly, the drying portion 40 in the embodiment may simultaneously supply heat energy from the first hot-air supply device 70 and heat energy from the second hot-air supply device 80 to both surfaces of the coating substrate 5.

The second hot-air supply device 80 may be disposed above the coating substrate 5 and may include a heat source generating hot air and a blower supplying the hot air to the coating substrate 5. The second hot-air supply device 80 may include a plurality of hot air nozzles 82 spaced apart from each other in the travelling direction of the coating substrate 5. In an embodiment, hot air generated by the heat source may be sprayed onto the coating substrate 5 through the hot air nozzles 82.

The first hot-air supply device 70 may be disposed below the coating substrate 5 and a plurality of the first hot-air supply devices 70 may be spaced apart from each other in a row in the travelling direction of the coating substrate 5. For example, the plurality of first hot-air supply devices 70 may be alternately disposed with a plurality of rollers 4 supporting the coating material 6.

The first hot-air supply device 70 may include a Coanda hot-air blower supplying heated air to the coating substrate 5 using the Coanda effect. The Coanda effect is a fluid dynamics phenomenon where a jet of fluid adheres to and flows along a curved surface due to viscosity and pressure gradients. The first hot-air supply device 70 in the embodiment may use the Coanda effect to increase the drying efficiency of the coating substrate 5.

Each first hot-air supply device 70 may include a Coanda nozzle 71 disposed such that the spray port 73 may face the coating substrate 5, and a hot-air generator 79 supplying hot air to the Coanda nozzle 71.

The hot-air generator 79 may include a heat source disposed below the Coanda nozzle 71 and generating hot air, and a fan supplying the generated hot air into the Coanda nozzle 71.

A flow path F through which hot air passes may be formed in the Coanda nozzle 71. Also, the Coanda nozzle 71 may include an inlet 74 through which hot air flows into a flow path F, and a spray port 73 through which the hot air flowing into the flow path F is discharged.

More specifically, the Coanda nozzle 71 in the embodiment may include a housing 72 having a flow path F formed therein, and the housing 72 may include a first sidewall 72a, a second sidewall 72b, and an extension frame 72c.

The first sidewall 72a and the second sidewall 72b may be disposed to face each other, and a space between the first sidewall 72a and the second sidewall 72b may be formed as the flow path F. Accordingly, the first sidewall 72a and the second sidewall 72b may be connected to each other.

The hot-air generator 79 positioned below the Coanda nozzle 71 may supply hot air to the inlet 74 of the flow path F formed between the first sidewall 72a and the second sidewall 72b. The hot air flowing into the flow path F may flow in the upward direction (Z-axis direction) in the first direction and may be discharged to the spray port 73.

The first sidewall 72a may be disposed perpendicular to the ground. For example, the first sidewall 72a may be disposed parallel to the first direction. The second sidewall 72b may be disposed to face the first sidewall 72a, and at least a portion thereof may be formed to protrude toward the first sidewall 72a. At least a portion of the second sidewall 72b may be formed as a curved surface. For example, an end portion of the second sidewall 72b protruding toward the first sidewall 72a may be formed as a curved surface. Accordingly, the heated air flowing into the flow path F may flow along the curved surface of the second sidewall 72b and may be discharged to the spray port 73.

Due to the shape of the second sidewall 72b, a distance between the second sidewall 72b and the first sidewall 72a may become narrower toward the spray port 73. Accordingly, hot air discharged from the spray port 73 may be discharged at a higher flow rate and higher pressure than hot air entering the flow path F.

The extension frame 72c may extend from the upper end of the first sidewall 72a toward the second sidewall 72b. The extended end of the extension frame 72c may be disposed close to the second sidewall 72b, and a gap between the end of the extension frame 72c and the second sidewall 72b may form the spray port 73 described above.

The second sidewall 72b may include a first extension portion 72d and a second extension portion 72e, which are disposed externally of the flow path F.

The first extension portion 72d may extend from the spray port 73 and may be formed flat. The first extension portion 72d may be disposed to oppose the lower surface of the coating substrate 5. Also, the first extension portion 72d may be disposed to approach the coating substrate 5 in a direction away from the spray port 73. For example, the first extension portion 72d may be disposed to form an acute angle of less than 45° with respect to the coating substrate 5. Accordingly, a distance between the first extension portion 72d and the coating substrate 5 may decrease in a direction away from the spray port 73.

Accordingly, due to Bernoulli's theorem, the flow rate of hot air passing between the first extension portion 72d and the coating substrate 5 may gradually increase and the internal pressure of the hot air may decrease. This inverse relationship between velocity and pressure - characteristic of Bernoulli's principle - creates a localized low-pressure zone that exerts a downward force on the coating substrate 5. Due to the decreased internal pressure, the coating substrate 5 may be pulled toward the first extension portion 72d, and accordingly, lifting of the coating substrate 5 during high-speed travel may be prevented. For example, high-speed travel may be referred to a travelling speed range between 40 and 100 m/min or between 80 and 120 m/min.

The second extension portion 72e may extend from the first extension portion 72d in a direction away from the spray port 73 and may include a curved surface. The curved surface of the second extension portion 72e may be spaced apart from the coating substrate 5. Accordingly, hot air discharged from the spray port 73 may rise obliquely along the first extension portion 72d, may heat the lower surface of the coating substrate 5, and may move down along the curved surface of the second extension portion 72e.

The system 1 for manufacturing an electrode in the embodiment may prevent lifting of the coating substrate 5 and may adhere the coating substrate 5 to the support roller through the Coanda effect described above. Accordingly, even when the coating substrate 5 is transported at a high speed, lifting of the coating substrate 5 during the transporting process may be suppressed.

Also, as the coating substrate 5 is pulled toward the Coanda nozzle 71, a contact area between the hot air and the coating substrate 5 may increase, thereby improving the drying efficiency of the coating substrate 5.

When the process speed is increased to increase the electrode production rate, the coating material 6 may be dried unevenly. When increasing the hot air supply in consideration of the uneven drying, the coating material 6 may be overdried or cracks may be formed in the coating material 6.

Considering this, the first hot-air supply device 70 in the embodiment may include a hot-air blocker 90.

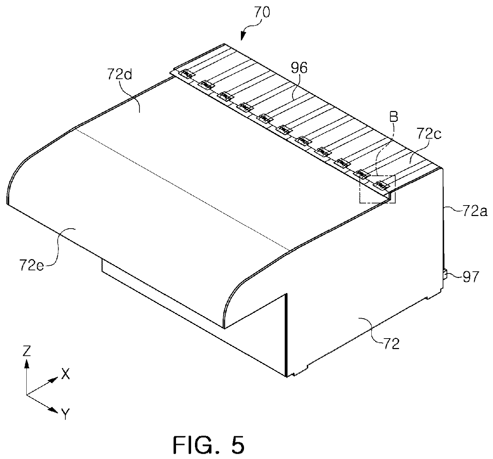

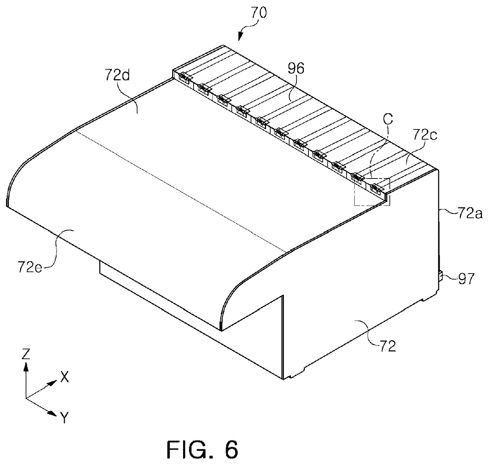

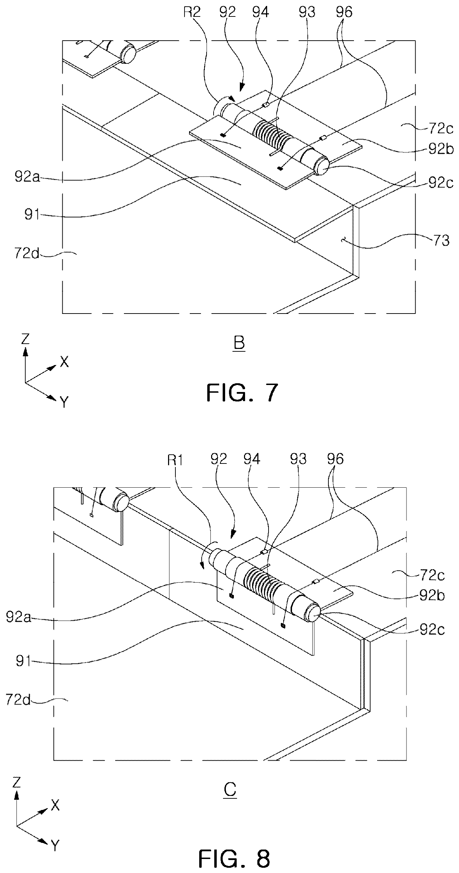

FIGS. 5 and 6 are perspective diagrams illustrating a Coanda nozzle illustrated in FIG. 3. FIG. 7 is an enlarged perspective diagram illustrating portion B in FIG. 5. FIG. 8 is an enlarged perspective diagram illustrating portion C in FIG. 6.

Referring to FIGS. 5, 6, 7 and 8, in the embodiment, the spray port 73 of the Coanda nozzle 71 may be formed in a slit shape in the width direction (Y-axis direction) of the coating substrate 5, and a plurality of hot-air blockers 90 may be coupled to a spray port 73.

The hot-air blocker 90 may block or open the spray port 73 of the Coanda nozzle 71. To this end, the hot-air blocker 90 may include a blocking door 91 opening and closing the spray port 73, a hinge portion 92 allowing the blocking door 91 to be hinge-coupled to the spray port 73, and a driving portion 98 rotating the blocking door 91.

The blocking door 91 may be coupled to the Coanda nozzle 71 by blocking the spray port 73. Accordingly, the blocking door 91 may be formed in the form of a flat plate and may be formed to correspond to the size of the spray port 73. A plurality of the blocking doors 91 may be disposed in a row in the length direction of the spray port 73, and each blocking door 91 may be coupled to the Coanda nozzle 71 through a hinge portion 92.

The hinge portion 92 may include a first plate 92a and a second plate 92b, rotating about a rotation axis.

In an embodiment, the hinge portion 92 may include a rotating shaft 92c, a first plate 92a coupled to the blocking door 91 and coupled to the rotating shaft 92c to rotate, a second plate 92b coupled to the housing 72 of the Coanda nozzle 71 and coupled to the rotating shaft 92c, and an elastic member 93 elastically pressing the first plate 92a and the second plate 92b such that the first plate 92a and the second plate 92b maintain a constant angle (e.g., 90 degrees).

The first plate 92a may be coupled to the blocking door 91, and the second plate 92b may be coupled to the Coanda nozzle 71. For example, the second plate 92b of the hinge portion 92 may be fastened to an extension frame 72c of the Coanda nozzle 71, and the blocking door 91 coupled to the first plate 92a of the hinge portion 92 may be disposed orthogonal to the extension frame 72c and may block the spray port 73. However, an embodiment thereof is not limited thereto, and the blocking door 91 may be disposed in various manners as long as the blocking door 91 may block the spray port 73.

Also, the hinge portion 92 in the embodiment may include an elastic member 93 elastically coupling the first plate 92a to the second plate 92b. The first plate 92a and the second plate 92b may be elastically pressed toward each other by the elastic member 93.

In an embodiment, the elastic member 93 may include a torsion spring coupled to the rotating shaft 92c.

Also, in an embodiment, the hinge portion 92 may include a spring hinge. The spring hinge may have a structure in which a torsion spring is coupled to the rotational axis of the hinge portion 92, and the first plate 92a and the second plate 92b of the hinge portion 92 may be maintained at a constant angle by the elastic force of the torsion spring.

As long as no external force is applied to the hinge portion 92, the blocking door 91 may be disposed to block the spray port 73 as illustrated in FIG. 8. Accordingly, the hinge portion 92 in the embodiment may basically maintain the form illustrated in FIG. 8. For example, in the hinge portion 92, the first plate 92a and the second plate 92b may maintain the state of being perpendicular to each other by the elastic force of the elastic member 93.

Also, when an external force is applied to the hinge portion 92 in the embodiment, the hinge portion 92 may be elastically deformed in a direction in which the angle between the first plate 92a and the second plate 92b increases. For example, when an external force is applied, as illustrated in FIG. 7, in the hinge portion 92, the first plate 92a and the second plate 92b may form an obtuse or straight angle (180 degrees). In this case, as the blocking door 91 rotates, the spray port 73 may be opened.

Also, the hinge portion 92 in the embodiment may no longer rotate in a direction in which the angle between the first plate 92a and the second plate 92b decreases, based on the state illustrated in FIG. 8. For example, the hinge portion 92 in the embodiment may include a stopper preventing the first plate 92a from further rotating in the R1 direction, based on the state illustrated in FIG. 8.

The driving portion 98 may open and close the blocking door 91 by rotating the hinge portion 92.

As illustrated in FIG. 4, the driving portion 98 may include a wire 96 having one end coupled to the first plate 92a, and a driving device 97 coupled to the Coanda nozzle 71 and connected to the other end of the wire 96 and pulling the wire 96.

The driving device 97 may be connected to the first plate 92a by the wire 96. For example, the driving device 97 may rotate the hinge portion 92 using the wire 96. One end of the wire 96 may be coupled to the first plate 92a of the hinge portion 92 and the other end may be coupled to the driving portion 98. Accordingly, when the driving device 97 pulls the wire 96, the first plate 92a and the blocking door 91 may rotate in the direction R2 illustrated in FIG. 7, and accordingly, the spray port 73 may be opened.

Accordingly, as for the driving device 97 in the embodiment, various devices which may repeatedly drive the operation of pulling and releasing the wire 96 by a predetermined length may be used. Also, the driving force of the driving device 97 may be greater than the elastic restoring force of the elastic member 93. For example, the driving device 97 may include a rotary motor such as a winch or a hydraulic/pneumatic cylinder, but an embodiment thereof is not limited thereto.

In an embodiment, a single driving device 97 may be connected to a single wire 96. However, an embodiment thereof is not limited thereto, and a plurality of wires 96 may be connected to a single driving device 97.

Also, in an embodiment, two wires 96 may be connected to a single blocking door 91. However, an embodiment thereof is not limited thereto, and the number of wires 96 connected to a single blocking door 91 may be varied if desired.

As described above, the Coanda nozzle 71 may be disposed in close proximity to the coating substrate 5. For example, the distance between the extension frame 72c and the coating substrate 5 (D in FIG. 3) may be 10 mm or less. Accordingly, when the driving device 97 is disposed on an upper surface of the extension frame 72c, the driving device 97 may be in contact with the coating substrate 5. Accordingly, to prevent interference between the driving device 97 and the coating substrate 5, the driving device 97 in the embodiment may be fixed and fastened to the sidewall of the housing 72. For example, the driving device 97 may be disposed on the external surface of the first sidewall 72a. Also, when the diameter of the wire 96 is excessively large, the wire 96 may in contact with the coating substrate 5. Accordingly, the diameter of the wire 96 may be 10 mm or less.

The hot-air blocker 90 in the embodiment may include a wire guide (94 in FIG. 7) to suppress unnecessary movement of the wire 96. The wire guide 94 may be formed in a tube shape and may be fastened to the second plate 92b or the housing 72, and the wire 96 may be disposed to penetrate the wire guide 94.

By including the wire guide 94, the wire 96 may only move in the length direction thereof and may be prevented from moving in the diameter direction of the wire 96.

At least one wire guide 94 may be disposed along the path along which the wire 96 is disposed. However, an embodiment thereof is not limited thereto, and a plurality of wire guides may be disposed if desired. For example, the wire guides 94 may be further disposed in various positions, such as the extension frame 72c or the first sidewall 72a.

The system 1 for manufacturing an electrode of a secondary battery in the embodiment may include a control portion (60 in FIG. 3) selectively opening and closing the blocking door 91 by controlling the driving portion 98. The control portion 60 may control the driving portion 98 based on the drying state of the coating material 6 having passed through the drying portion 40. For example, when the degree of dryness of coating material 6 passing through drying portion 40 is uneven and deviates, the control portion 60 may selectively open the blocking door 91 in response to the deviation in the degree of dryness. Accordingly, the control portion 60 may be connected to the entirety of the driving devices 97 and may selectively operate the entirety of the driving devices 97.

Here, the drying state of coating material 6 may be determined through the measuring portion 50 described below, or may be information directly input by an operator.

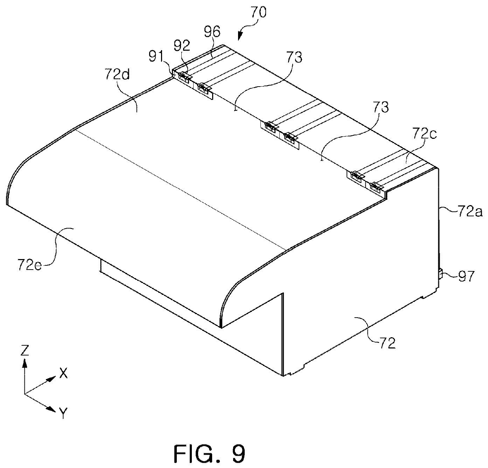

FIG. 9 is a diagram illustrating a modified example of a Coanda nozzle illustrated in FIG. 5.

Referring to FIG. 9, in the Coanda nozzle 71 in the embodiment, the blocking door 91 may be disposed only in a portion of the spray port 73. In an embodiment, a hot-air blocker 90 may be disposed to correspond to a region of the coating substrate 5 in which coating material 6 is not applied.

Generally, overdrying or cracks in the coating material 6 may primarily occur around a portion (hereinafter, referred to as an uncoated portion) of the coating substrate 5 in which the coating material 6 is not applied. Accordingly, by controlling the hot air sprayed onto the uncoated portion, overdrying or cracks may be reduced in the coating material 6.

Considering this, in the Coanda nozzle 71 in the embodiment, the blocking door 91 may be disposed only in the region corresponding to the uncoated portion of the coating substrate 5. In this case, the region of the spray port 73 in which the blocking door 91 is not disposed may remain open.

However, an embodiment thereof is not limited thereto, and various modifications may be made. For example, the spray port 73 may not be formed in the region corresponding to the uncoated portion of the spray port 73, and the blocking door 91 may be disposed in the region corresponding to the region on which the coating material 6 is applied.

The system 1 for manufacturing an electrode in the embodiment described above may selectively open the spray port 73 of the Coanda nozzle 71 using the hot-air blocker 90. For example, hot air may be sprayed to the portion of the coating substrate 5, to which the coating material 6 is applied, by opening the blocking door 91, and hot air may not be sprayed to the portion in which the coating material 6 is not applied by closing the blocking door 91. As described above, by using the system 1 for manufacturing an electrode in the embodiment, an operator may control hot air sprayed from the Coanda nozzle 71 based on the drying state of the coating material 6. Accordingly, the coating material 6 may be uniformly dried, thereby increasing product yield.

In the description below, embodiments will be further described with reference to specific experimental examples. The embodiments and comparative examples included in the experimental examples are merely examples of the present disclosure and do not limit the scope of the appended claims. It will be apparent to those skilled in the art that various modifications and variations may be made to the embodiments within the scope and spirit of the present disclosure, and such modifications and variations may fall in the scope of the claims.

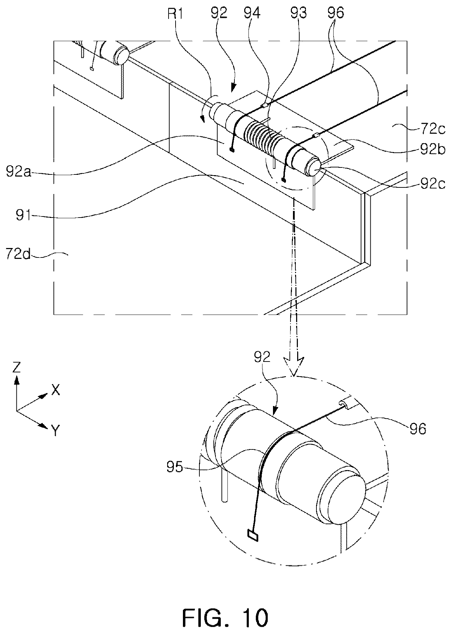

FIG. 10 is a diagram illustrating a hot-air blocker according to another embodiment, corresponding to FIG. 8.

Referring to FIG. 10, a hot-air blocker 90 in the embodiment may include a guide groove 95 for guiding a wire 96 and/or for suppressing unnecessary movement of the wire 96.

A hinge portion 92 may have a guide groove 95 formed in a portion in contact with the wire 96. The wire 96 may be inserted into the guide groove 95 such that movement in the diameter direction may be suppressed.

To this end, the guide groove 95 may be formed in the shape of a groove into which the wire 96 may be inserted. For example, the guide groove 95 may be formed to have a width and a depth slightly greater than a diameter of the wire 96. The guide groove 95 may be designed as a recessed channel that accommodates the wire 96 by allowing it to be securely inserted. To ensure proper fit and stability, the groove is formed with a width and depth slightly greater than the diameter of the wire. This configuration enables smooth placement and alignment of the wire 96 within the groove, minimizing friction and movement during operation while supporting precise routing of the wire 96.

By including the guide groove 95, the wire 96 may only move in the length direction thereof, and movement in the diameter direction of the wire 96 may be suppressed. Accordingly, the wire 96 may move more stably, and may open and close a blocking door 91.

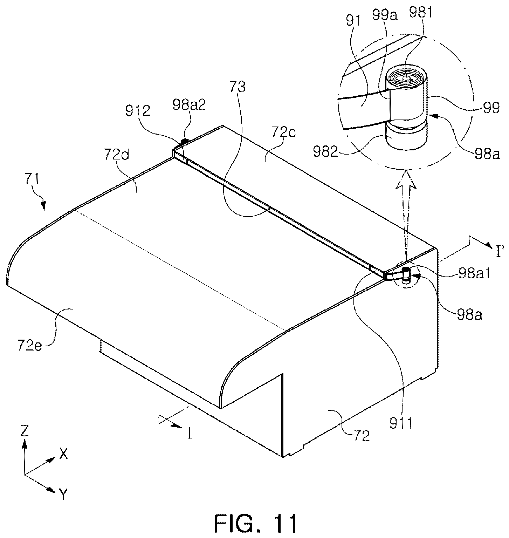

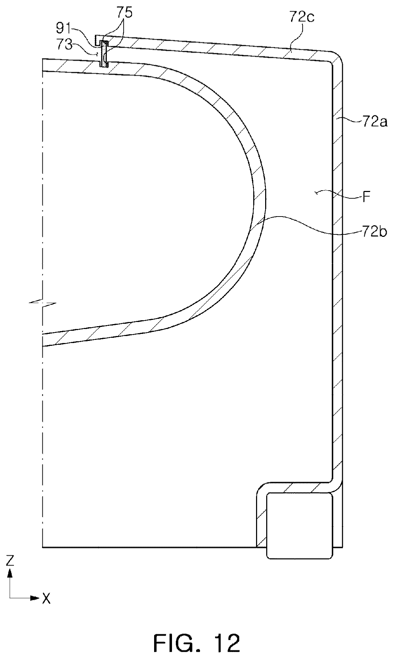

FIG. 11 is a diagram illustrating a hot-air blocker according to another embodiment. FIG. 12 is a cross-sectional diagram taken along line I-I' in FIG. 11.

Referring to FIGS. 11 and 12, in a hot-air blocker 90 in the embodiment, the blocking door 91 may be coupled to the Coanda nozzle 71 in the form of a sliding door.
To this end, the hot-air blocker 90 in the embodiment may include a blocking door 91 sliding and coupled to the spray port 73 and opening and closing the spray port 73, and a slide driving portion 98a disposed on a side surface of the Coanda nozzle 71 and winding the blocking door 91.

The blocking door 91 may be elongated in a band shape having a constant width and may slide and be coupled to the spray port 73 of the Coanda nozzle 71. The blocking door 91 may be coupled to the spray port 73 of the Coanda nozzle 71 to reciprocally move in the width direction (Y-axis direction) of the coating substrate 5.

To this end, a rail groove 75 into which a blocking door 91 is inserted may be formed in the spray port 73 of the Coanda nozzle 71. The rail groove 75 may be elongated in the width direction (Y-axis direction) of the coating substrate 5 and may be formed on an extension frame 72c of the Coanda nozzle 71 and a second sidewall 72b opposing thereto.

The blocking door 91 in the embodiment may have a portion coupled to the rail groove 75 and a portion wound around a winding shaft 981, described below. Accordingly, the blocking door 91 in the embodiment may be formed of a bendable material. For example, the blocking door 91 may be formed of an elastically bendable metal plate, but an embodiment thereof is not limited thereto.

The slide driving portion 98a may be disposed on a side surface of the Coanda nozzle 71 and may include a winding shaft 981 coupled to one end of the blocking door 91 and winding the blocking door 91 and a power device 982 rotating the winding shaft 981 in a winding or unwinding direction as may be needed.

The winding shaft 981 may be fastened to one end of the blocking door 91 and may be disposed to rotate about a center in the length direction thereof as an axis of rotation. Accordingly, when the winding shaft 981 rotates in one direction, the blocking door 91 may be wound around the winding shaft 981. When the winding shaft 981 rotates in the opposite direction, the blocking door 91 may be unwound from the winding shaft 981 and may be supplied to the spray port 73 of the Coanda nozzle 71

A power device 982 may be connected to the winding shaft 981 and may rotate the winding shaft 981 to wind or unwind the blocking door 91. Accordingly, as the power device 982, various generally used devices which may rotate the winding shaft 981 in both directions may be used. In an embodiment, a motor may be used as the power device 982, but an embodiment thereof is not limited thereto.

The winding shaft 981 may be disposed in the door housing 99. The door housing 99 may be disposed on a side surface of the Coanda nozzle 71, and the winding shaft 981 and a blocking door 91 wound around the winding shaft 981 may be accommodated in the door housing 99. Accordingly, the door housing 99 may be formed in various manners as long as the door housing 99 may accommodate the blocking door 91 wound around the winding shaft 981 therein. An opening 99a may be formed in the door housing 99, and the blocking door 91 may be discharged externally of the door housing 99 through the opening 99a and may be supplied to the spray port 73 of the Coanda nozzle 71. Accordingly, the opening 99a of the door housing 99 may be disposed in a position corresponding to the rail groove 75 formed in the Coanda nozzle 71.

In the embodiment, the winding shaft 981 may be disposed in the door housing 99, and the power device 982 may be disposed externally of the door housing 99. However, an embodiment thereof is not limited thereto. For example, the power device 982 may be disposed in the door housing 99.

In the embodiment, the hot-air blocker 90 may be disposed on both side surfaces of the Coanda nozzle 71. For example, the slide driving portion 98a may include a first driving portion 98al and a second driving portion 98a2, which are disposed on both side surfaces of the Coanda nozzle 71, respectively, and the blocking door 91 may include a first blocking door 911 wound on the first driving portion 98a1, and a second blocking door 912 wound on the second driving portion 98a2.

In this case, two blocking doors 911 and 912 may slide and be coupled to both ends of the spray port 73, respectively. In an embodiment, the first and second blocking doors 911 and 912 may be disposed on both ends of the spray port 73, respectively, and an opening may be formed in a central portion of the spray port 73. Accordingly, the flow of hot air on both ends of the spray port 73 may be blocked.

In the hot-air blocker 90 in the embodiment described above, the blocking door 91 may slide and move, and accordingly, the blocking door 91 may be positioned in a desired position by an operator. Also, even changes in the type or size of the electrode changes, or the position or size of the uncoated portion may also be easily addressed. So, the hot-air blocker 90 may be designed with movable blocking doors 911 and 91 that can slide into position at both ends of the spray port 73 to restrict the hot air flow to the extent that may be needed while leaving a central opening to allow targeted air flow. The adjustable nature of the blocking doors 911 and 912 enables operators to reposition them as may be needed. This flexibility allows the system to accommodate variations in electrode type, size, or the location of uncoated regions, ensuring consistent performance across different configurations.

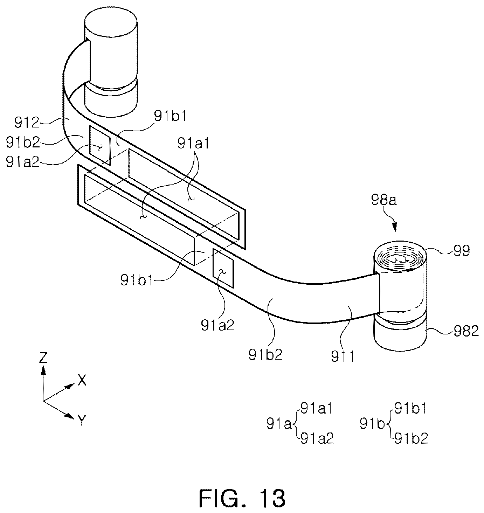

FIG. 13 is a diagram illustrating a hot-air blocker according to another embodiment. For ease of description, the Coanda nozzle is not illustrated. Also, for ease of description, the first blocking door 911 and the second blocking door 912 may be spaced apart from each other by a predetermined distance but the actual distance between the first blocking door 911 and the second blocking door 912 may be less than the illustrated example.

Referring to FIG. 13, a hot-air blocker 90 in the embodiment may be formed similarly to the hot-air blocker 90 in FIG. 12 described above, and only the shape of the blocking door 91 may be different.

In the embodiment, each of the first blocking door 911 and the second blocking door 912 may include at least one opening portion 91a allowing hot air to pass through, and at least one blocking portion 91b blocking at least a portion of the hot air. The opening portion 91a may be formed in the form of a hole penetrating the blocking door 91, and the blocking portion 91b may be formed in a blocked form as described above. Accordingly, hot air discharged from the Coanda nozzle 71 may be discharged through the opening portion 91a. The opening portion 91a and the blocking portion 91b may be alternately disposed, and may be formed in the same size or different sizes.

In an embodiment, each blocking door 91 may include two opening portions 91a and two blocking portions 91b, and the two opening portions 91a and the two blocking portions 91b may be alternately disposed in the length direction of the blocking door 91. The two opening portions 91a may be formed such that the first opening portion 91a1, disposed closer to the end of the blocking door 91, may have a size greater than that of the second opening portion 91a2. Also, the two blocking portions 91b may be formed such that the first blocking portion 91b1, disposed closer to the end of the blocking door 91, may have a size less than that of the second blocking portion 91b2.

Here, the end of the blocking door 91 may indicate the end positioned furthest from the winding shaft 981, rather than the portion coupled to the winding shaft 981, among both ends of the blocking door 91.

Also, in the embodiment, the hot-air blocker 90 may be disposed on both side surfaces of the Coanda nozzle 71, respectively, and in this case, the two blocking doors 91 may at least partially overlap each other. To this end, two rail grooves 75 may be disposed side by side, and the two blocking doors 91 may be inserted into different rail grooves 75.

In the spray port 73, at least a portion of the first blocking door 911 and at least a portion the second blocking door 912 may overlap each other. For example, the first opening portion 91a1 of the first blocking door 911 and the first opening portion 91a1 of the second blocking door 912 may overlap each other. In this case, the overlapping first opening portion 91a1 may be disposed in a central portion of the spray port 73, and the first blocking portion 91b1, the second opening portion 91a2, and the second blocking portion 91b2 may be disposed in sequence on both sides of the overlapping first opening portion 91a1.

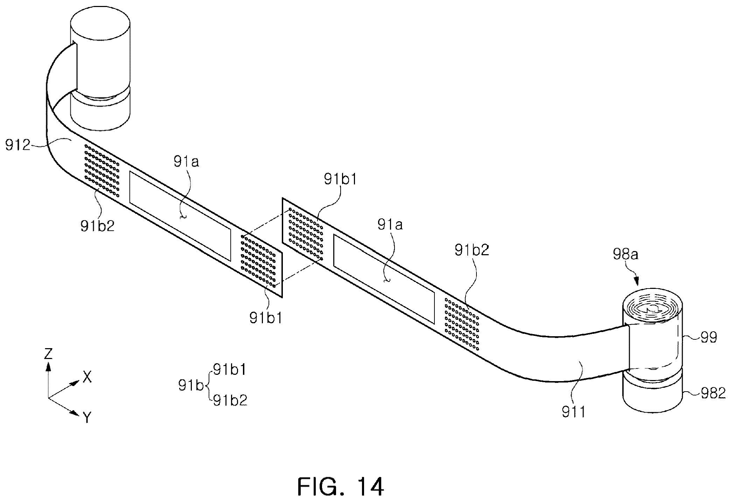

FIG. 14 is a diagram illustrating a hot-air blocker according to another embodiment. For ease of description, the Coanda nozzle is not illustrated. Also, for ease of description, the first blocking door 911 and the second blocking door 912 may be spaced apart by a predetermined distance, but the actual distance between the first blocking door 911 and the second blocking door 912 may be less than shown in the illustrated embodiment.

Referring to FIG. 14, the hot-air blocker 90 in the embodiment may be formed similarly to the hot-air blocker 90 in FIG. 13 described above, only the shape of the blocking door 91 may be different.

In the blocking door 91 of the embodiment, a blocking portion 91b may be formed in the form of a perforated plate or mesh. Accordingly, the blocking portion 91b in the embodiment may partially allow hot air to pass through without completely blocking hot air.

The amount of hot air passing through the blocking portion 91b may be controlled by the size and the number of holes formed in the blocking portion 91b.

Also, in the embodiment, each blocking door 91 may include one opening portion 91a and two blocking portions 91b disposed on both ends of the opening portion 91a. For example, each blocking door 91 may include a first blocking portion 91b1 disposed on the end side of the blocking door 91, and a second blocking portion 91b2 disposed at the opposite end side, with respect to the opening portion 91a. However, an embodiment thereof is not limited thereto, and the number, the position, and the size of the blocking portions 91b may be varied if desired.

In the embodiment, the opening portion 91a may be formed to have an area greater than the blocking portions 91b, and in the two blocking doors 91, the first blocking portions 91b1 disposed on the end may overlap each other. In this case, the flow of hot air may further increase in the second blocking portion 91b2 than in the portion in which the first blocking portion 91b1 overlaps.

The hot-air blocker 90 in the embodiment may determine the flow rate of hot air differently in the blocking portions 91b.

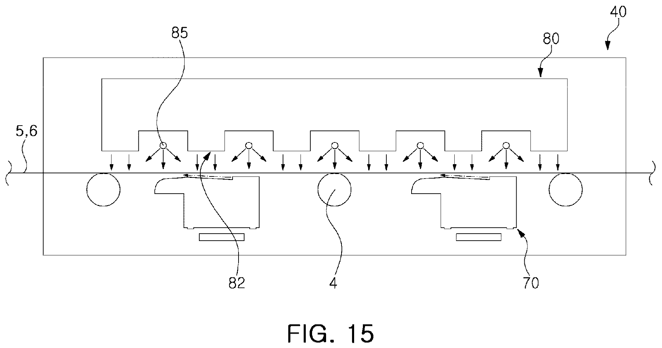

FIG. 15 is a diagram illustrating a drying portion according to another embodiment, corresponding to FIG. 2.

Referring to FIG. 15, the drying portion in the embodiment may be configured similarly to the aforementioned embodiment and may further include a third heat source. Similarly to the second heat source, the third heat source may be disposed on the upper side of the coating substrate 5.

The second heat source and the third heat source may be different types of heat sources. For example, the second heat source may include a second hot-air supply device 80 supplying hot air to the coating material 6. The third heat source may include a heater directly applying radiant heat to the coating material 6.

In an embodiment, an infrared lamp 85 may be used as the third heat source. Accordingly, the second hot-air supply device 80 in the embodiment may include a plurality of hot air nozzles 82 spaced apart from each other by a predetermined distance in the travelling direction of the coating substrate 5, and at least one infrared lamp 85 may be disposed between the plurality of hot air nozzles 82.

Accordingly, the drying portion 40 in the embodiment may alternately supply thermal energy from the second heat source and thermal energy from the third heat source to the coating material 6, and accordingly, the coating material 6 applied to the coating substrate 5 may be repeatedly heated by high-temperature hot air and infrared radiation the solvent may be removed.

The third heat source in the embodiment may be disposed below the coating substrate 5. In this case, the third heat source may be disposed between the first hot-air supply devices 70, which are the first heat sources.

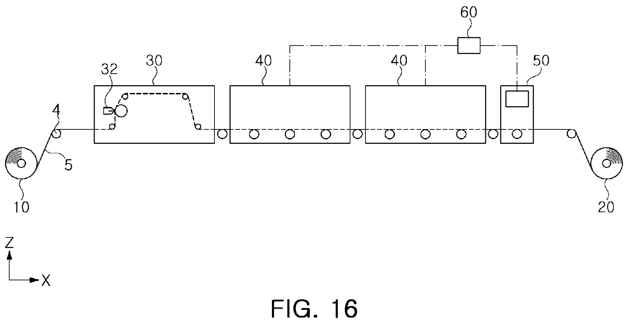

FIG. 16 is a diagram illustrating a system for manufacturing an electrode according to another embodiment.

Referring to FIGS. 16 and 4 together, the system for manufacturing an electrode in the embodiment may include a measuring portion 50 measuring the drying state of coating material 6 having passed through the drying portion 40, and a control portion 60 selectively opening and closing the blocking door 91 by controlling a driving portion (98 in FIG. 4) based on the drying state measured by the measuring portion 50.

In the embodiment, a plurality of the drying portions 40 may be disposed in the travelling direction of the coating substrate 5. The measuring portion 50 may be disposed on the rear end of the drying portion 40 and may measure the drying state of the coating material 6 having passed through the drying portion 40.

The measuring portion 50 may measure the degree of dryness of the coating material 6. In an embodiment, the measuring portion 50 may obtain an image of the coating material 6 and may measure the degree of dryness of the coating material 6 based on the image. In this case, the measuring portion 50 may include a camera irradiating infrared or near-infrared light onto the coating material 6. For example, the degree of dryness can be recorded through various ways, such as by measuring temperature using a thermal imaging camera, by color change, and/or by measuring luminous intensity and spectrum.

Also, in an embodiment, the measuring portion 50 may measure the temperature of the coating material 6 and may determine the drying state based on the measured temperature. However, an embodiment thereof is not limited thereto.

The control portion 60 may determine whether to open or close the blocking door 91 based on the drying state of the coating material 6 measured by the measuring portion 50, and may control the driving portion 98 accordingly. For example, when the degree of dryness of the coating material 6 passing through the drying portion 40 is uneven and deviates, the control portion 60 may selectively open the blocking door 91 in response to the deviation. Accordingly, the control portion 60 may be connected to the entirety of driving devices 97 and may selectively operate the entirety of driving devices 97.

Also, the control portion 60 in the embodiment may also be applied to the embodiments of FIGS. 11, 12, 13 and 14 described above. In this case, the control portion 60 may open and close the blocking door 91 by controlling the power device 982.

In the embodiment, the measuring portion 50 may be disposed on the rear end of the drying portion 40, but an embodiment thereof is not limited thereto.

For example, the measuring portion 50 may be disposed between two drying portions 40. In this case, the control portion 60 may control the driving portion 98 of the drying portion 40 positioned on the rear end of the measuring portion 50 based on the drying state of the coating material 6 measured by the measuring portion 50.

For example, in a further embodiment, the drying portion 40 may comprise a second hot-air supply device 80 that is adapted to supply hot air to a second surface of the coating substrate 5, the second surface being opposite to the first surface of the coating substrate 5. The second hot-air supply device 80 may include a plurality of hot air nozzles 82 spaced apart from each other at a predetermined distance in a travelling direction of the coating substrate 5, and/or at least one infrared lamp 85 that is disposed between the plurality of hot air nozzles 82.

In a further embodiment, the system for manufacturing an electrode may include a coating portion 30 applying a coating material 6 onto a coating substrate 5 travelling along a path; a drying portion 40 drying the coating material 6 by spraying hot air onto the coating material 6; and a control portion 60 that is configured to control a flow of hot air based on a drying state of the coating material 6 passing through the drying portion 40. The drying portion 40 may include at least one hot-air blower spraying hot air onto one surface of the coating substrate 5, a plurality of blocking doors 91 may be disposed to be open and closed in a spray port 73 through which hot air is sprayed, and the control portion 60 may be adapted to control opening and closing of the plurality of blocking doors 91.

The above system may be used for uniform drying of one or more electrodes comprising a coating substrate 5 onto that a coating material 6 is applied. The coating material 6 may be applied to a first surface of the coating substrate 5.

A method for drying and/or manufacturing one or more electrodes for a secondary battery may comprise the following steps: applying a coating material 6 to a coating substrate 5, the coating substrate 5 travelling along a path; and drying the coating material 6. A coating portion 30 and a drying portion 40 may be provided to apply the coating material 6 onto at least a first surface of the coating substrate 5 and to dry the deposited coating material 6, respectively. The drying portion 40 may include at least one Coanda nozzle 71 that is adapted to spray hot air onto the first surface of the coating substrate 5. The Coanda nozzle 71 may include at least one hot-air blocker 90 that is adapted to selectively block a spray port 73 through which hot air is sprayed. In an embodiment, two or more hot-air blockers 90 may be provided and arranged to be coupled to a single spray port 73, respectively comprising a blocking door 91, a hinge portion 92 and a driving portion 98. The spray port 73 may be opened and closed by the blocking door 91, blocking door 91 may be allowed to be hinge-coupled to the spray port 73 by the hinge portion 92, and each of the blocking doors 91 may be rotated by the driving portion 98. Optionally, each of the blocking doors 91 may be selectively opened and closed by a control portion 60 through controlling the driving portion 98.

The drying portion 40 may include at least one hot-air blower spraying hot air onto one surface of the coating substrate, a plurality of blocking doors 91 are disposed to be open and closed in a spray port 73 through which hot air is sprayed, and the control portion 60 controls opening and closing of the plurality of blocking doors 91. The hot air blower may include a Coanda nozzle 71 disposed such that the spray port is directed toward the coating substrate 5 and a hot air generator supplying hot air to the Coanda nozzle 71.

According to the aforementioned embodiments, even when the travelling speed of the coating substrate to which the coating material is applied is increased, the coating material may be dried evenly, thereby increasing the product yield.

Only specific examples of implementations of predetermined embodiments are described. Variations, improvements and enhancements of the disclosed embodiments and other embodiments may be made with respect to the disclosure of this patent document.
(Aspect 1) A system for manufacturing an electrode includes a coating portion applying a coating material to a coating substrate travelling along a path; and a drying portion drying the coating material, wherein the drying portion includes at least one Coanda nozzle spraying hot air onto a first surface of the coating substrate, and wherein the Coanda nozzle includes a hot-air blocker selectively blocking a spray port through which hot air is sprayed.
(Aspect 2) The system of aspect 1, the spray port may be formed in a slit shape in a width direction of the coating substrate, and a plurality of the hot-air blockers may be coupled to a single spray port.
(Aspect 3) The system of aspect 1 or 2, the hot-air blocker may include a blocking door opening and closing the spray port; a hinge portion allowing the blocking door to be hinge-coupled to the spray port; and a driving portion rotating the blocking door.
(Aspect 4) The system of aspect 3, the hinge portion may include a rotating shaft; a first plate coupled to the blocking door and coupled to the rotating shaft to rotate; a second plate coupled to a housing of the Coanda nozzle and coupled to the rotating shaft; and an elastic member elastically pressing the first and second plates such that the first plate and the second plate maintain a constant angle.
(Aspect 5) The system of aspect 4, the elastic member may include a torsion spring coupled to the rotating shaft.
(Aspect 6) The system of aspect 4 or 5, the driving portion may include a wire having one end coupled to the first plate; and a driving device coupled to the Coanda nozzle, connected to the other end of the wire and pulling the wire.
(Aspect 7) The system of aspect 6, the system may further include a wire guide formed in a tube shape and fastened to the second plate or the housing, and the wire is disposed to penetrate the wire guide.
(Aspect 8) The system of aspect 6 or 7, the driving device may be fastened to an external surface of a sidewall of the housing.
(Aspect 9) The system of anyone of the preceding aspects, the hinge portion may have a guide groove formed in a portion in contact with the wire, and the wire may be inserted into the guide groove such that movement in a diameter direction is prevented.
(Aspect 10) The system of anyone of aspects 6 to 8, the hot-air blocker may include a blocking door sliding and coupled to the spray port and opening and closing the spray port; and a slide driving portion disposed on a side surface of the Coanda nozzle and winding the blocking door.
(Aspect 11) The system of aspect 10, the slide driving portion may include a winding shaft winding the blocking door; and a power device rotating the winding shaft.
(Aspect 12) The system of aspect 12 or 11, the slide driving portion may include a first driving portion and a second driving portion, disposed on both side surfaces of the Coanda nozzle, respectively, and the blocking door includes a first blocking door wound on the first driving portion and a second blocking door wound on the second driving portion.
(Aspect 13) The system of aspect 12, in the spray port, at least a portion of the first blocking door and at least a portion of the second blocking door may be disposed to overlap each other.
(Aspect 14) The system of aspect 13, each of the first blocking door and the second blocking door may include at least one opening portion allowing hot air to pass through and at least one blocking portion blocking at least a portion of hot air.
(Aspect 15) The system of anyone of aspects 3 to 9, the system may further include a control portion selectively opening and closing the blocking door by controlling the driving portion.
(Aspect 16) The system of anyone of the preceding aspects, the drying portion may further include a hot-air supply device supplying hot air to a second surface of the coating substrate.
(Aspect 17) The system of aspect 16, the hot-air supply device may include a plurality of hot air nozzles spaced apart from each other at a predetermined distance in a travelling direction of the coating substrate, and at least one infrared lamp is disposed between the plurality of hot air nozzles.
(Aspect 18) The system of anyone of aspects 3 to 9, the system may further include a measuring portion measuring a drying state of the coating material passing through the drying portion; and a control portion selectively opening and closing the blocking door by controlling the driving portion based on the drying state measured by the measuring portion.
(Aspect 19) A system for manufacturing an electrode includes a coating portion applying a coating material onto a coating substrate travelling along a path; a drying portion drying the coating material by spraying hot air onto the coating material; and a control portion controlling a flow of hot air based on a drying state of the coating material passing through the drying portion.
(Aspect 20) The system of aspect 19, the drying portion may include at least one hot-air blower spraying hot air onto one surface of the coating substrate, a plurality of blocking doors are disposed to be open and closed in a spray port through which hot air is sprayed, and the control portion controls opening and closing of the plurality of blocking doors.

## Claims

1. A system (1) for manufacturing an electrode, the system (1) comprising:
a coating portion (30) adapted to apply a coating material (6) to a coating substrate (5) travelling along a path; and
a drying portion (40) adapted to dry the coating material (6),
wherein the drying portion (40) includes at least one Coanda nozzle (71) that is adapted to spray hot air onto a first surface of the coating substrate (5), and
wherein the Coanda nozzle (71) includes at least one hot-air blocker (90) that is adapted to selectively block a spray port (73) through which hot air is sprayable.

2. The system (1) of claim 1, wherein the spray port (73) is formed in a slit shape in a width direction of the coating substrate (5), and
wherein a plurality of the hot-air blockers (90) is provided,
preferably wherein the plurality of hot-air blockers (90) is coupled to a single spray port (73).

3. The system (1) of claim 1 or 2, wherein the at least one hot-air blocker (90) respectively includes:
a blocking door (91) coupled to the spray port (73) and adapted to open and close the spray port (73);
a hinge portion (92) configured to allow the blocking door (91) to be hinge-coupled to the spray port (73); and
a driving portion (98) adapted to rotate the blocking door (91).

4. The system (1) of claim 3, wherein the hinge portion (92) includes:
a rotating shaft (92c);
a first plate (92a) coupled to the blocking door (91) and coupled to the rotating shaft (92c) so as to be rotatable;
a second plate (92b) coupled to a housing (72) of the Coanda nozzle (71) and coupled to the rotating shaft (92c); and
an elastic member (93) configured to elastically press the first and second plates (92a, 92b) such that the first plate (92a) and the second plate (92b) maintain a constant angle.

5. The system (1) of claim 4, wherein the elastic member (93) includes a torsion spring coupled to the rotating shaft (92c), and/or
wherein the driving portion (98) includes:
a wire (96) arranged to have one end coupled to the first plate (92a); and
a driving device (97) arranged to be coupled to the Coanda nozzle (71), connected to the other end of the wire (96) and adapted to pull the wire (96).

6. The system (1) of claim 5, further comprising:
a wire guide (94) arranged to be formed in a tube shape and fastened to the second plate (92b) or the housing (72),
wherein the wire (96) is disposed to penetrate the wire guide (94), and
preferably wherein the driving device (97) is arranged to be fastened to an external surface of a sidewall (72a) of the housing (72).

7. The system (1) of one of claims 3 to 6, wherein the hinge portion (92) has a guide groove (95) formed in a portion in contact with the wire (96), and
wherein the wire (96) is insertable into the guide groove (95) such that movement in a diameter direction of the wire (96) can be prevented.

8. The system (1) of claim 1, wherein the at least one hot-air blocker (90) includes:
a blocking door (91) sliding and coupled to the spray port (73) and opening and closing the spray port (73); and
a slide driving portion (98a) disposed on a side surface of the Coanda nozzle (71) and comprising a winding shaft (981) that is adapted to wind the blocking door (91),
wherein preferably the slide driving portion (98a) further includes a power device (982) that is adapted to rotate the blocking door (91).

9. The system (1) of claim 8, wherein the slide driving portion (98a) includes a first driving portion (98a1) and a second driving portion (98a2), disposed on both side surfaces of the Coanda nozzle (71), respectively, and
wherein the blocking door (91) includes a first blocking door (911) wound on the first driving portion (98a1) and a second blocking door (912) wound on the second driving portion (98a2),
preferably wherein, in the spray port (73), at least a portion of the first blocking door (911) and at least a portion of the second blocking door (912) are disposed to overlap each other.

10. The system (1) of claim 9, wherein each of the first blocking door (911) and the second blocking door (912) include at least one opening portion (91a, 91a1, 91a2) adapted to allow hot air to pass through and at least one blocking portion (91b, 91b1, 91b2) adapted to block at least a portion of hot air.

11. The system (1) of one of claims 3 to 10, further comprising:
a control portion (60) that is configured to selectively open and close the blocking door (91) by controlling the driving portion (98); and
preferably further comprising a measuring portion (50) configured to measure a drying state of the coating material (6) passing through the drying portion (40), wherein the blocking door (91) is selectively openable and closable by the control portion (60) based on the drying state of the coating material (6).

12. The system (1) of one of claims 1 to 11, wherein the drying portion (40) further comprises first and second hot-air supply devices (70, 80) adapted to supply hot air to the first surface and to a second surface of the coating substrate (5), respectively,
preferably wherein the second hot-air supply device (80) includes a plurality of hot air nozzles (82) spaced apart from each other at a predetermined distance in a travelling direction of the coating substrate (5), and at least one infrared lamp (85) disposed between the plurality of hot air nozzles (82).

13. Use of a system (1) of one of claims 1 to 12 for uniform drying of one or more electrodes for a secondary battery.

14. A method for drying one or more electrodes for a secondary battery, the method comprising:
applying, by a coating portion (30), a coating material (6) to a coating substrate (5), the coating substrate (5) travelling along a path; and
drying, by a drying portion (40), the coating material (6),
wherein the drying portion (40) includes at least one Coanda nozzle (71) that is adapted to spray hot air onto a first surface of the coating substrate (5), and
wherein the Coanda nozzle (71) includes at least one hot-air blocker (90) that is adapted to selectively block a spray port (73) through which hot air is sprayed.

15. The method of claim 14, wherein a plurality of the hot-air blockers (90) is provided, the plurality of hot-air blockers (90) being arranged to be coupled to a single spray port (73) and respectively comprising a blocking door (91), a hinge portion (92) and a driving portion (98),
wherein the spray port (73) is opened and closed by the blocking door (91),
wherein blocking door (91) is allowed to be hinge-coupled to the spray port (73) by the hinge portion (92), and
wherein each of the blocking doors (91) is rotated by the driving portion (98),
optionally wherein each of the blocking doors (91) is selectively opened and closed by a control portion (60) through controlling the driving portion (98).
